# EUROPÄISCHE PATENTSCHRIFT

(11) **EP 2 245 428 B1**
(45) Veröffentlichungstag und Bekanntmachung des Hinweises auf die Patenterteilung: **08.04.2015**
(21) Anmeldenummer: 09713229.4
(22) Anmeldetag: 10.02.2009
(51) Int. Cl.: G01D 5/245

(54) **MASSVERKÖRPERUNG, MESSEINRICHTUNG UND MESSVERFAHREN ZUR ABSOLUTPOSITIONSBESTIMMUNG**
MATERIAL MEASURE, MEASURING DEVICE AND MEASURING METHOD FOR DETERMINING AN ABSOLUTE POSITION
MESURE MATÉRIALISÉE, DISPOSITIF DE MESURE ET PROCÉDÉ DE MESURE POUR DÉTERMINER UNE POSITION ABSOLUE

(30) Priorität: 20.02.2008 DE 102008010095
(43) Veröffentlichungstag der Anmeldung: 03.11.2010
(73) Patentinhaber: Schaeffler Technologies AG & Co. KG, 91074 Herzogenaurach (DE)
(72) Erfinder: SÜSSKIND, Roland, 98617 Neubrunn (DE); KEGELER, Jörg, 98553 Schleusingen (DE); MÜLLER, Rene, 98527 Suhl (DE); SCHMID, Günter, 90475 Nümberg (DE)
(86) Internationale Anmeldenummer: PCT/DE2009/000181
(87) Internationale Veröffentlichungsnummer: WO 2009/103263

(56) Entgegenhaltungen:
- EP-A- 1 742 022
- WO-A-2007/057645
- DE-A1- 4 037 545

## Beschreibung

### Gebiet der Erfindung

Die Erfindung betrifft eine Maßverkörperung für eine Positionsmesseinrichtung, umfassend mindestens eine Messspur mit Inkrementalmarkierungen und mindestens eine Messspur mit Absolutmarkierungen. Die Erfindung betrifft weiterhin eine Positionsmesseinrichtung umfassend eine erfindungsgemäße Maßverkörperung. Die Erfindung betrifft weiterhin ein Verfahren zum Bestimmen einer Messposition eines ersten Körpers in Bezug zu einen zweiten Körper mittels einer erfindungsgemäßen Positionsmesseinrichtung sowie ein Verfahren zum Kalibrieren einer erfindungsgemäßen Positionsmesseinrichtung Derartige Maßverkörperungen, Positionsmesseinrichtungen bzw. Positionsmessverfahren, die eine Bestimmung der Absolutposition eines Körpers erlauben, können z.B. in Vermessungseinrichtungen oder, mit entsprechender Rückkopplung, auch in Geschwindigkeits- und/oder Lageregelkreisen eingesetzt werden.

Messsysteme für diese Zwecke beruhen entweder auf dem inkrementalen oder dem absoluten Messprinzip. Inkrementale Messsysteme weisen eine Maßverkörperung mit einer Vielzahl von entlang einer Messstrecke in gleichem Abstand bzw. gleichem Winkel angeordneten Markierungen auf, ähnlich einem Strichcode (Inkrementalmarkierungen). Wird nun ein Körper, umfassend eine entsprechende Abtasteinrichtung, relativ zur Maßverkörperung entlang der Messstrecke verschoben, kann die Abtasteinrichtung die Anzahl der überfahrenen Inkrementalmarkierungen zählen. Durch den bekannten Abstand zweier Inkrementalmarkierungen, ist die zurückgelegte Strecke bestimmbar. Zwar weisen inkrementale Messeinrichtungen einen einfachen Aufbau auf und sind infolgedessen auch weit verbreitet. Nachteilig ist jedoch, dass diese auf direktem Wege keine Absolutpositionsbestimmung eines Körpers erlauben. Vielmehr muss stets die Anzahl der überfahrenen Inkrementalmarkierungen seit dem sich die Abtasteinrichtung in einer bekannten Referenzposition befand, gezählt werden. Nach jedem Einschalten muss die Abtasteinrichtung daher zunächst eine bekannte Referenzmarke aufsuchen, um später Absolutpositionsbestimmungen zu ermöglichen. Dieser Referenzsuchlauf ist einerseits zeitaufwendig und kann darüber hinaus in bestimmten Anwendungen auch unmöglich sein, da es hierbei z.B. zu Kollisionen mit Werkstücken kommen kann.

Demgegenüber ermöglichen absolute Messsysteme praktisch bereits direkt nach dem Einschalten eine Absolutpositionsbestimmung. Hierfür sind entlang der Messstrecke auf der Maßverkörperung eine Vielzahl von Positionsinformationen hinterlegt (Absolutmarkierungen). Typischerweise stellen die Absolutmarkierungen eine Binärkodierung der Positionsinformationen dar, wobei mit steigender Anzahl der Bits die Auflösung des Messsystems steigt. Die Abtasteinrichtung weist in der Regel ausreichend viele Sensorelemente auf, um alle Bits einer Absolutmarkierung in einem Schritt auszulesen, so dass nach dem Einschalten keine oder allenfalls eine minimale Relativbewegung notwendig ist, um die Absolutposition auszulesen.

Aus der WO 03/060431 A1 ist eine Messeinrichtung bekannt, deren Maßverkörperung eine Vielzahl von Codeelementen aufweist, wobei mehrere in Messrichtung hintereinander liegende Codeelemente eine Absolutpositionsinformation darstellen. Um die Zuverlässigkeit bzw. die Betriebssicherheit zu erhöhen, besteht jedes Codeelement aus zwei in Messrichtung aufeinander folgenden Teilbereichen, die zueinander komplementäre Eigenschaften aufweisen. Die binäre Information eines Codeelements wird durch einen Vergleich der Abtastsignale beider Teilbereiche gewonnen. Das Messsystem der WO 03/060431 A1 basiert auf einem optischen Prinzip, d.h. die binäre Information der Codeelemente wird z.B. durch transparente und nicht transparente Materialeigenschaften kodiert.

Aus der DE 102005047009 A1 ist ein Positionsmesssystem bekannt, dessen Maßverkörperung Inkrementalmarkierungen in Form von periodisch angeordneten Ausnehmungen sowie zwischen den Ausnehmungen angeordneten Absolutmarkierungen umfasst, wobei die Absolutmarkierungen insbesondere durch magnetische Markierungen gebildet werden. Dadurch soll eine besonders platzsparende Maßverkörperung ermöglicht werden. Die Inkrementalmarkierungen werden induktiv und die Absolutmarkierungen nicht induktiv ausgelesen.

Nachteilig bei Messsystemen, die auf optischen Abtastprinzipien beruhen, ist die Tatsache, dass diese anfällig gegenüber Verschmutzungen sind. Entsprechend kostspielige Vorkehrungen zur Abschirmung z.B. gegenüber Schmiermittel, sind daher notwendig. Messsysteme, bei denen die Absolutmarkierungen durch magnetische Markierungen gebildet werden, weisen den Nachteil auf, dass die sich unregelmäßig überlagernden Magnetfelder die Auslesung erschweren bzw. die Messgenauigkeit verringern.

### Aufgabe der Erfindung

Der Erfindung liegt die Aufgabe zugrunde, eine Maßverkörperung für ein Messsystem bereitzustellen, die einfach und kostengünstig herzustellen ist, eine absolute Positionsbestimmung ermöglicht und die zuvor genannten Nachteile überwindet. Der Erfindung liegt ferner die Aufgabe zugrunde ein entsprechendes Messsystem und -verfahren bereitzustellen.

### Zusammenfassung der Erfindung

Diese Aufgabe wird durch die kennzeichnenden Merkmale des Anspruchs 1 gelöst. Der Erfindung liegt die Erkenntnis zugrunde, dass durch die Kombination von Inkrementalmarkierungen bestehend aus magnetisch aktiven Elementen, d.h. Elemente die Magnetfelder erzeugen, und Absolutmarkierungen bestehend aus magnetisch passiven Elementen, d.h. Elemente die selbst keine Magnetfelder erzeugen, ein optimales Verhältnis von Konstruktionsaufwand, Herstellungsaufwand und Kosten einerseits sowie Messgenauigkeit andererseits erreicht werden kann. Dabei kann sogar in Kauf genommen werden, dass somit unterschiedliche Herstellungsverfahren für die Messspur mit Inkrementalmarkierungen und für die Messspur mit Absolut-markierungen notwendig sind, eine Tatsache die aus wirtschaftlichen Gesichtspunkten für sich alleine gesehen zu vermeiden wäre. Indem die Inkrementalmarkierungen durch magnetisch aktive Elemente gebildet werden, kann eine sehr hohe Messgenauigkeit erzielt werden. Es bietet sich außerdem an, hierbei auf bereits bestehende inkrementale Messsysteme zurückzugreifen. Die Ausbildung der Messspur mit Absolutmarkierungen erfolgt erfindungsgemäß auf eine sehr einfache Weise, indem die benötigten Informationen durch magnetisch passive Elemente dargestellt werden. Aufgrund dieser einfachen Fertigungsweise kann die Kodierung der Messspur mit Absolutmarkierungen leicht an unterschiedliche Anforderungen, z.B. eine bestimmte geforderte Auflösung, angepasst werden. Erfindungsgemäß soll die geforderte Genauigkeit des Messsystems durch die Inkrementalspur, d.h. die Ausgestaltung der Inkrementalmarkierungen und/oder die Ausgestaltung der Sensoren zur Abtastung der Inkrementalmarkierungen, erreicht werden, während die Absolutspur lediglich die Informationen zur Absolutpositionsbestimmung aufweisen soll.

Die erfindungsgemäße Maßverkörperung kann sowohl in Linearmesssystemen als auch in Rotativmesssystemen eingesetzt werden. In Linearmesssystemen werden durch die Absolutmarkierungen z.B. Werte zwischen Null und der Länge der Maßverkörperung dargestellt. In Rotativmesssystemen werden durch die Absolutmarkierungen z.B. Werte zwischen Null und 360 Grad dargestellt.

Erfindungsgemäß steht die Teilung der Messspur mit Inkrementalmarkierungen und die Teilung der Messspur mit Absolutmarkierungen in einem ganzzahligen Verhältnis.

Gemäß einer Ausführungsform der Erfindung sind die magnetisch aktiven Elemente Permanentmagnete. Die inkrementelle Teilung wird durch regelmäßig geteilte Polpaare verkörpert und kann stoffschlüssig, formschlüssig und/oder kraftschlüssig mit dem Maschinenelement verbunden sein, das die Maßverkörperung tragen soll. So kann z.B. bei einem Wälzlager der die Maßverkörperung tragende Ring aus einem ferromagnetischen Material, z.B. Eisen oder Kobalt, gefertigt werden und die inkrementelle Teilung anschließend eingebracht werden. Möglich ist es auch ein kunststoffgebundenes Magnetpulver zu verwenden.

Gemäß einer Ausführungsform der Erfindung werden die magnetisch passiven Elemente durch ein hochpermeables Material ausgebildet. Gemäß einer Ausführungsform der Erfindung werden die magnetisch passiven Elemente unter Verwendung von magnetisch leitenden und magnetisch nicht leitenden Bereichen gebildet. Gemäß einer Ausführungsform der Erfindung wechseln sich die magnetisch leitenden und die magnetisch nicht leitenden Bereiche entlang der Messspur ab. Durch geeignete Messverfahren können diese Bereiche identifiziert werden und somit die Absolutspur abgetastet werden. Beispielsweise kann eine Abtastvorrichtung mit Mitteln zur Erzeugung eines magnetischen Feldes und Sensoren zur Messung des magnetischen Flusses, z.B. magnetoresistive Sensoren, vorgesehen werden. Dabei ist der magnetische Fluss durch den magnetoresistiven Sensor, wenn dieser über Stellen mit magnetisch leitenden Bereichen der Absolutspur positioniert ist, hoch und der elektrische Widerstand des magnetoresistiven Sensors wird entsprechend verändert. Demgegenüber wird der magnetische Fluss durch magnetisch nicht leitende Bereiche der Absolutspur schlecht geleitet, so dass sich ein größeres magnetisches Streufeld ausbildet und der gemessene magnetische Fluss durch den magnetoresistiven Sensor geringer ist. Entscheidend ist hierbei nicht, dass die magnetisch nicht leitenden Bereiche den magnetischen Fluss komplett unterdrücken, sondern dass diese Bereiche im Vergleich zu den magnetisch leitenden Bereichen einen wesentlich größeren magnetischen Widerstand (Reluktanz) aufweisen. Je größer das Verhältnis der Reluktanz beider Bereiche ist, desto sicherer kann die Absolutspur abgetastet werden, .d.h. dieses Verhältnis wird letztendlich durch die zur Verfügung stehenden Messgeräte bzw. -methoden bestimmt. Um entsprechende Reluktanzänderungen zu erzielen, sollte die Absolutspur aus einem hochpermeablen Material, insbesondere aus ferromagnetischem Material, gefertigt werden. Dazu eignen sich insbesondere Stähle wie 16MnCr5, Federstahl, Wälziagerstahl 100Cr6, martensitischer Edelstahl nicht jedoch austenitischer Edelstahl.

Die magnetisch nicht leitenden Bereiche können insbesondere durch Vertiefungen, Lücken oder Löcher gebildet werden. Dementsprechend stellen die magnetisch leitenden Bereiche beispielsweise Erhebungen, Stege oder Vorsprünge dar. Es entsteht somit eine Absolutspur mit einer Struktur ähnlich einem Lochstreifen wie er als Datenträger für Computeranlagen verwendet wurde. Vorteilhaft ist die sehr einfache Herstellungsweise, so können die magnetisch nicht leitenden Bereiche z.B. geprägt, eingestanzt, gelasert oder geätzt werden. Die Erstreckung der Vertiefungen, Lücken oder Löcher entlang der Messstrecke kann z.B. in einem Bereich von 10 Mikrometer bis zu 5000 Mikrometer liegen, vorzugsweise in einem Bereich von 200 Mikrometer bis 1000 Mikrometer liegen, weiter vorzugsweise z.B. 500 oder 250 Mikrometer betragen. Die Vertiefungen, Lücken oder Löcher können beliebige Formen aufweisen, z.B. rechteckig, quadratisch, kreisrund oder elliptisch.

Gemäß einer Ausführungsform der Erfindung ist der mindestens einen Messspur mit Absolutmarkierungen eine Referenzabsolutspur zugeordnet, die parallel zur Messspur mit Absolutmarkierungen verläuft und wobei entlang der Messspur mit Absolutmarkierungen und entlang der Referenzabsolutspur jeweils magnetisch leitende und magnetisch nicht leitende Bereiche angeordnet sind und die Bereiche der Referenzabsolutspur komplementär zu den Bereichen der Messspur mit Absolutmarkierungen ausgebildet sind-Die Referenzabsolutspur dient der Erhöhung der Zuverlässigkeit der Messung, indem eine bzw. ein Teil einer durch die Sensoren abgetasteten Absolutmarkierung der Messspur mit Absolutmarkierungen mit der entsprechenden bzw. dem entsprechendem Teil einer durch die Sensoren abgetasteten Absolutmarkierung der Referenzabsolutspur verglichen werden kann. Eine Auswerteeinrichtung kann im Falle einer Abweichung vom erwarteten Ergebnis entsprechende Maßnahmen treffen.

Gemäß einer Ausführungsform der Erfindung ist in einer Absolutmarkierung eine Information zur Absolutpositionsbestimmung kodiert ist. Grundsätzlich ist für jede zu identifizierende Absolutposition eine eigene Positionsinformation notwendig. Die Kodierung dieser Positionsinformation erfolgt dabei typischerweise in Form des Binärcodes. D.h. Sensoren tasten jeweils einen bestimmten Bereich der Absolutspur ab, wobei durch die in diesem Bereich hinterlegten Binärwerte, also Nullen oder Einsen, die Absolutposition kodiert ist. Eine einfache Methode stellt dabei die Darstellung der Binärwerte durch Vertiefungen bzw. Vorsprünge dar, indem z.B. eine Vertiefung einer Null entspricht und ein Vorsprung einer Eins entspricht. Dabei stellt jede Absolutmarkierung, also jede Vertiefung oder jeder Vorsprung, mindestens ein Bit dar. Insbesondere gilt, dass eine erste Absolutmarkierung, die gegenüber einer zweiten Absolutmarkierung doppelt so lang ist, auch doppelt so viele Bits darstellt. Neben Vertiefungen bzw. Vorsprüngen als Form der Verkörperung der Binärwerte bestehen auch andere Möglichkeiten. So ist gemäß einer Ausführungsform der Erfindung die Information zur Absolutpositionsbestimmung ganz allgemein unter Verwendung der geometrischen Form, insbesondere der Länge, Breite oder Tiefe, und/oder der Position der magnetisch leitenden und magnetisch nicht leitenden Bereiche kodiert. Die Kodierung der Absolutposition durch die Absolutmarkierungen kann durch Anordnungen mit entlang der Messstrecke aufeinander folgenden Bits (Längskodierung) als auch durch Anordnungen mit entlang der Messstrecke parallel angeordneten Bits bei mindestens zwei Absolutspuren (Querkodierung) bzw. durch Kombinationen dieser erfolgen. Auch wenn die Kodierung mittels des Binärcodes eine sehr einfache Möglichkeit darstellt, könnte z.B. auch ein Ternärcode verwendet werden, so können die Absolutmarkierungen durch unterschiedlich stark ausgeprägte Vertiefungen dargestellt werden. Dadurch wären zwar die Anforderungen an die Abtasteinrichtung größer, die zu erzielende Auflösung pro Messspur mit Absolutmarkierungen könnte jedoch erhöht werden. Im Fall einer Binärkodierung kann die Absolutposition z.B. im Dualcode oder Graycode dargestellt werden. Bei einer Längskodierung erfolgt die Kodierung vorzugsweise derart, dass sich beim Verschieben der Abtasteinrichtung um ein Bit bereits eine neue Absolutposition ergibt.

Bei einer Querkodierung sind der geforderten Auflösung des Messsystems entsprechend viele parallele Messspuren notwendig, z.B. 15 Spuren bei einer Kodierung umfassend 15 Bit. Aus Platzgründen ist daher die Längskodierung in der Regel zu bevorzugen.

Gemäß einer Ausführungsform der Erfindung ist in einer Inkrementalmarkierung eine Information zur Relativpositionsbestimmung kodiert. Insbesondere bestimmt der Abstand bzw. die Länge zweier aufeinanderfolgender Inkrementalmarkierungen eine bestimmte Relativposition.

Gemäß einer Ausführungsform der Erfindung verlaufen die Messspur mit Absolutmarkierungen und die Messspur mit Inkrementalmarkierungen parallel zueinander oder überdecken sich komplett. Parallele Messspuren sind dabei sowohl bei linearen Messeinrichtungen als auch bei rotativen Messeinrichtungen denkbar. Im letzteren Fall verlaufen die beiden Messspuren dabei in der Regel kreisförmig derart nebeneinander, dass beide Messspuren den gleichen Radius aufweisen, entlang der gemeinsamen Rotationsachse jedoch versetzt angeordnet sind. Möglich sind bei rotativen Messeinrichtungen jedoch auch Messspuren mit unterschiedlichem Radius. Sich überdeckende Messspuren stellen eine platzsparende Ausführung dar.

Die erfindungsgemäße Positionsmesseinrichtung umfasst eine erfindungsgemäße Maßverkörperung sowie eine dazu relativ bewegliche Abtasteinrichtung mit Sensoren zur Abtastung der Inkrementalmarkierungen und/oder der Absolutmarkierungen. Die Sensoren der Abtasteinrichtung können auf einen einzigen Messkopf untergebracht werden, es können aber auch mehrere Messköpfe verwendet werden, die dann entweder direkt nebeneinander oder entlang der Messstrecke versetzt angeordnet werden.

Gemäß einer Ausführungsform der Erfindung sind die Sensoren zur Abtastung der Inkrementalmarkierungen durch Sensoren zur Messung des magnetischen Flusses ausgebildet. Jede Inkrementalmarkierung wird durch ein magnetisch aktives Element dargestellt, das ein entsprechendes Magnetfeld erzeugt. Die Übergänge zwischen zwei benachbarten Magnetfeldern können durch eine Messung des magnetischen Flusses bestimmt werden. Durch Interpolation zwischen zwei Messpunkten, d.h. zwei Übergängen, kann die letztendlich zur Verfügung stehende Auflösung der Messspur mit Inkrementalmarkierungen weiter gesteigert werden. Gemäß einer Ausführungsform der Erfindung sind die Sensoren zur Abtastung der Absolutmarkierungen durch Sensoren zur Messung des magnetischen Flusses, der magnetischen Induktion und/oder elektromagnetischer Strahlung ausgebildet. Die Wahl von Sensoren zur Messung des magnetischen Flusses ist aus Gründen der Wirtschaftlichkeit zu bevorzugen, da die Abtasteinrichtung identische Sensoren aufweisen kann, wodurch z.B. deren Ansteuerung und die Auswertung vereinfacht wird. Die Sensorelemente sind vorzugsweise kleiner als die Vertiefungen, Lücken oder Löcher. Sie geben die jeweiligen Spursignale als analoges und/oder digitales Signal in üblicher Form wieder. Eine elektronische Verarbeitung gibt die Signale mittels gängiger Schnittstellen wie 1 Vss, En-Dat2.2, SSI, Hyperface, Drive-Click usw. wieder.

Gemäß einer Ausführungsform der Erfindung sind die Sensoren zur Messung des magnetischen Flusses durch Hallsensoren oder magnetoresistive Sensoren ausgebildet. Magnetoresistive Sensoren, basierend auf dem AMR-Effekt (Anisotrope Magneto Resistive), sind insbesondere bei geringen Feldstärken zu bevorzugen. Neben herkömmlichen magnetoresistiven Sensoren können auch GMR-Sensoren (Giant Magneto Resistive) verwendet werden.

Gemäß einer Ausführungsform der Erfindung befindet sich mindestens ein Sensor an einem Teil eines Gehäuses der Abtasteinrichtung, insbesondere an einem Schaltungsträger. Der Sensor kann dabei insbesondere formschlüssig, stoffschlüssig oder kraftschlüssig mit dem Schaltungsträger verbunden sein.

Gemäß einer Ausführungsform der Erfindung wird die Positionsmesseinrichtung in einer Linearführung umfassend ein stillstehendes Maschinenelement eingesetzt, wobei sich die Maßverkörperung insbesondere auf dem stillstehendem Maschinenelement befindet. Gemäß einer Ausführungsform der Erfindung wird die Positionsmesseinrichtung in einer Lagerstelle eines beweglichen Maschinenteils umfassend ein Lager eingesetzt, wobei sich die Maßverkörperung insbesondere auf dem beweglichen Maschinenelement befindet. Bei Drehverbindungen kann sich die Maßverkörperung dazu z.B. auf der Zylindermantelfläche des sich drehenden Maschinenelements befinden.

Gemäß einer Ausführungsform der Erfindung ist die Messgenauigkeit resultierend aus den Inkrementalmarkierungen und den Sensoren zur Abtastung der Inkrementalspur größer als die Messgenauigkeit resultierend aus den Absolutmarkierungen und den Sensoren zur Abtastung der Absolutspur. Die höhere Messgenauigkeit kann durch die Art der Verkörperung der Inkrementalmarkierungen und/oder durch die Wahl der Art der Sensoren zur Abtastung der Inkrementalspur erreicht werden. Vorteilhaft ist hierbei, dass sich die Genauigkeit der Positionsmesseinrichtung insgesamt durch die höhere Messgenauigkeit der Inkrementalspur steigern lässt, indem Inkrementalmarkierungen den Absolutmarkierungen zugeordnet werden. Aufgrund der periodischen und somit einfacheren Struktur der Inkrementalspur, lässt sich bei dieser vergleichsweise einfach und kostengünstig eine höhere Auflösung realisieren.

Das erfindungsgemäße Verfahren zum Bestimmen einer Messposition eines ersten Körpers in Bezug zu einen zweiten Körper mittels einer Positionsmesseinrichtung gemäß einem der Ansprüche 12 - 19, wobei die Körper zueinander relativ beweglich sind und wobei an einem Körper die Maßverkörperung und an einem anderen Körper die Abtasteinrichtung angeordnet ist, umfasst die Verfahrensschritte:
- Platzieren des ersten und/oder des zweiten Körpers in der zu bestimmenden Messposition,
- Abtasten mindestens einer Absolutmarkierung durch die Sensoren zur Abtastung der Absolutmarkierungen und (NICHT VOLLE LÄNGE!!!)
- Bestimmen der Messposition anhand der mindestens einen abgetasteten Absolutmarkierung.

Es ist selbstverständlich unerheblich, ob nur einer der beiden Körper oder beider Körper bewegt werden, um die Messposition einzunehmen. Beim Abtasten muss die Messeinrichtung in der Lage sein, eine ausreichende Information abzutasten, um die Absolutposition in einem Schritt, d.h. ohne weiteres (relatives) Verfahren der Messeinrichtung, bestimmen zu können. Bei einer Bitkodierung der Positionsinformation sind dazu entsprechend der Anzahl der kodierten Bits eine entsprechend große Anzahl von Sensoren vorhanden. Es ist nicht notwendig eine Absolutmarkierung komplett abzutasten, vielmehr kann auch ein zusammenhängender Bereich zweier benachbarter Absolutmarkierungen abgetastet werden. Für eine 15-Bit Kodierung sind daher 15 Sensoren alleine für die Erfassung der Absolutmarkierungen erforderlich. Bei einer Längskodierung der Absolutspur werden die Sensoren dazu fluchtend entlang der Messstrecke angeordnet; bei einer Querkodierung werden die Sensoren quer zur Messstrecke angeordnet; bei einer Kombination von Längs- und Querkodierung werden die Sensoren in einem entsprechendem Array angeordnet. Falls eine Referenzabsolutspur vorhanden ist, sind entsprechend zusätzliche Sensoren erforderlich.

Gemäß einer Ausführungsform der Erfindung umfasst das erfindungsgemäße Verfahren ferner den Schritt des Abtastens mindestens einer Relativmarkierung durch die Sensoren zur Abtastung der Relativmarkierungen, wobei das Bestimmen der Absolutposition anhand der mindestens einen abgetasteten Absolutmarkierung und der mindestens einen abgetasteten Relativmarkierung erfolgt. Hierdurch kann die Genauigkeit und/oder die Auflösung des Messverfahrens gesteigert werden. Insbesondere kann gemäß einer Ausführungsform der Erfindung das Bestimmen der Messposition mittels Synchronisationsdaten erfolgen, die eine Zuordnung zwischen Absolutmarkierungen und Inkrementalmarkierungen darstellen. Dabei wird zwar weiterhin die eigentliche Absolutposition aus der Absolutspur gewonnen, indem die entsprechende Absolutmarkierung abgetastet wird. Anhand einer zugeordneten Inkrementalmarkierung, in der Regel die entlang der Messstrecke nächstliegende Inkrementalmarkierung, kann nun aber die die Genauigkeit und/oder die Auflösung erhöht werden, indem die abgetastete Inkrementalmarkierung sowie entsprechende Synchronisationsdaten in die Bestimmung der Absolutposition mit einfließen. Die Messspur mit Inkrementalmarkierungen wird dabei als ein zusätzlicher Maßstab neben der Messspur mit Absolutmarkierungen verwendet, wobei dieser zusätzlicher Maßstab eine höhere Auflösung und/oder Genauigkeit aufweist. Die höhere Auflösung kann dadurch erreicht werden, dass zwischen zwei benachbarten Inkrementalmarkierungen interpoliert wird; eine Methode die aufgrund der magnetisch aktiven Elemente ermöglicht wird. Weiterhin ermöglichen die magnetisch aktiven Elemente eine höhere Messgenauigkeit gegenüber den magnetisch passiven Elementen der Messspur mit Absolutmarkierungen. Die Synchronisationsdaten geben dabei den möglichen Versatz zwischen der Position der Absolutmarkierungen und Relativmarkierungen wieder, der sich ergeben kann, wenn die jeweiligen Messspuren zwar z.B. eine gleiche Teilung aufweisen, jedoch beim Auf- bzw. Anbringen an dem entsprechendem Körper ungenau zueinander ausgerichtet wurden.

Das erfindungsgemäße Verfahren zum Kalibrieren einer Positionsmesseinrichtung gemäß einem der Ansprüche 12 - 19, umfasst die Verfahrensschritte:
- Platzieren der Abtasteinrichtung und/oder der Maßverkörperung an einer bekannten Kalibrierposition,
- Abtasten mindestens einer Absolutmarkierung,
- Abtasten mindestens einer Relativmarkierung und
- Kalibrieren der Positionsmesseinrichtung durch Hinterlegen von Synchronisationsdaten, die eine Zuordnung zwischen Absolutmarkierungen und Inkrementalmarkierungen darstellen.

Die bekannte Kalibrierposition kann durch Messung mittels einer weiteren Messeinrichtung bestimmt werden. Möglich ist auch, dass die bekannte Kalibrierposition anhand einer eindeutigen Referenzposition, z.B. dem Ende einer linearen Messstrecke, gegebenenfalls mit entsprechender Relativverschiebung hierzu, bestimmt wird. Nachdem die mindestens eine Absolutmarkierung und die mindestens eine Relativmarkierung abgetastet wurden, können die Synchronisationsdaten, insbesondere der Versatz zwischen der Position der Absolutmarkierungen und Relativmarkierungen, ermittelt und hinterlegt werden.

Gemäß einer Ausführungsform der Erfindung werden die Verfahrensschritte zum Kalibrieren einer Positionsmesseinrichtung an mindestens zwei unterschiedlichen Kalibrierpositionen durchgeführt werden. Dadurch kann ein sich entlang der Messstrecke ändernder Versatz zwischen der Position den Absolutmarkierungen und Relativmarkierungen berücksichtigt werden. Gemäß einer Ausführungsform der Erfindung werden die Verfahrensschritte zum Kalibrieren einer Positionsmesseinrichtung an jeder Absolutmarkierung als Kalibrierposition durchgeführt. Somit kann die Genauigkeit und/oder Auflösung noch weiter gesteigert werden. Für jede Absolutmarkierung wird ein entsprechender Versatz hinterlegt.

### Kurze Beschreibung der Zeichnungen

Ausführungsbeispiele der vorliegenden Erfindung werden anhand der beiliegenden Figuren erläutert. Hierbei zeigt
- Fig. 1: eine schematische Darstellung eines Ausführungsbeispiels einer erfindungsgemäßen Maßverkörperung,
- Fig. 2: eine schematische Darstellung eines Ausführungsbeispiels einer erfindungsgemäßen Positionsmesseinrichtung,
- Fig. 3: eine schematische Darstellung einer Abtasteinrichtung einer erfindungsgemäßen Positionsmesseinrichtung gemäß einem ersten Ausführungsbeispiel,
- Fig. 4: eine schematische Darstellung einer Abtasteinrichtung einer erfindungsgemäßen Positionsmesseinrichtung gemäß einem zweiten Ausführungsbeispiel,
- Fig. 5: eine schematische Schnittdarstellung des Ausführungsbeispiels gemäß Fig. 2,
- Fig. 6: eine schematische Darstellung einer erfindungsgemäßen Messspur mit Absolutmarkierungen
- Fig. 7: eine schematische Darstellung einer erfindungsgemäßen Positionsmesseinrichtung integriert in einem Rundtisch, und
- Fig. 8: eine schematische Anordnung zweier Abtasteinrichtungen gemäß dem Ausführungsbeispiel nach Fig. 7.

### Detaillierte Beschreibung der Zeichnung

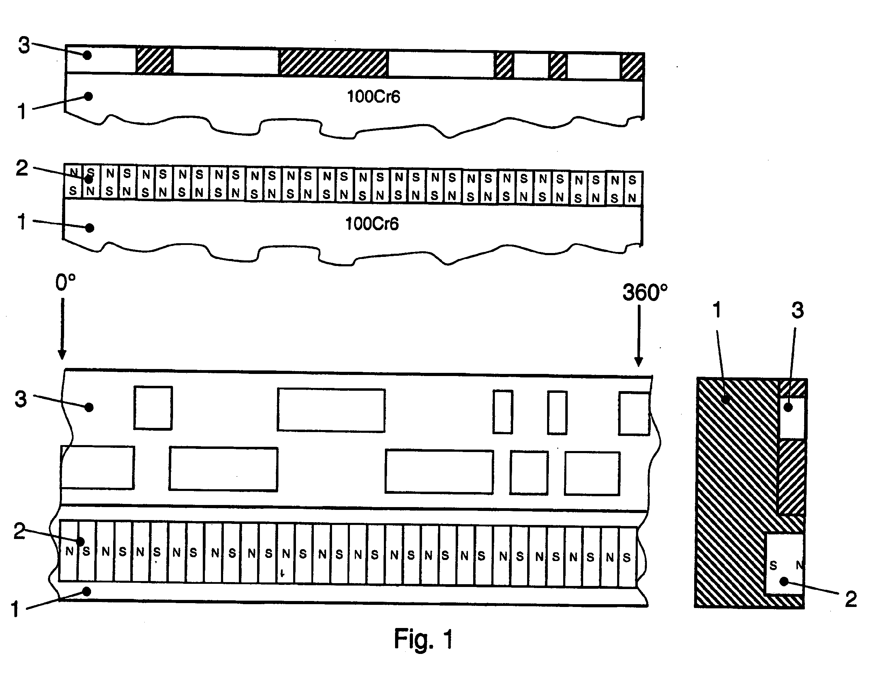

Fig. 1 zeigt eine schematische Darstellung eines Ausführungsbeispiels einer erfindungsgemäßen Maßverkörperung. Diese kann sowohl für eine absolute Winkelkodierung als auch für eine absolute Längenkodierung verwendet werden. Bei einer Winkelkodierung ist die Maßverkörperung auf einer Zylindermantelfläche einer Scheibe oder einer drehenden Wellenscheibe eines Lagers aufgebracht. Die folgende Beschreibung gilt für eine Winkelkodierung; für eine Längenkodierung gilt das Beschriebene in analoger Weise. Eine inkrementelle Teilung 2 ist als regelmäßig geteilte Polpaare ausgeführt, die direkt auf der Zylindermantelfläche oder in einer umlaufenden Nut der Scheibe stoffschlüssig oder formschlüssig eingebracht ist. Bei einem Lager ist die Scheibe 1 z.B. aus dem Wälzlagerstahl 100Cr6 oder einem vergleichbaren Stahl gefertigt. Auch andere ferritische oder austenitische Stähle, auch Edelstähle, NE-Metalle oder Kunststoffe sind denkbar. Parallel zur inkrementellen Winkelteilung 2 ist eine Absolutkodierung 3 angeordnet, die in Form eines endlosen Bandes um die Scheibe geschlungen sein kann und stoffschlüssig, formschlüssig oder kraftschlüssig mittels einer Press- oder Übergangspassung mit der Scheibe verbunden ist. Die Absolutkodierung 3 weist Vertiefungen, Lücken oder Löcher auf, die z.B. eingeprägt, eingestanzt, gelasert oder geätzt seinen können. Dabei ergibt sich eine entlang der Messstrecke zufällige oder quasizufällige Binärteilung oder eine beliebige andere bekannte Kodierung. Das Ausführungsbeispiel gemäß Fig. 1 zeigt eine Längskodierung, wobei der einzigen Messspur mit Absolutmarkierungen eine Referenzabsolutspur zugeordnet ist, deren Bereiche jeweils einen komplementären Wert aufweisen. D.h. es befindet sich entlang der Messstrecke neben einer Vertiefung in der Messspur mit Absolutmarkierungen ein Bereich mit Material in der Referenzabsolutspur und umgekehrt. Das bewirkt, dass bei zwei paarweise zugeordneten magnetoresistiven Sensorpaaren ein Sensor von einer hohen magnetischen Flussdichte durchdrungen wird, während der andere Sensor von einer niedrigen Flussdichte durchdrungen wird. Die Sensoren liefern analoge Signale, wobei diese meist mittels eines Differenzverstärkers gewonnen werden und die Spannungspotentiale der stromdurchflossenen magnetoresistiven Sensoren messen. Durch Differenzbildung dieser beiden analogen Spannungssignale wird ein nullpunktssymmetrisches Spannungssignal erzeugt, so dass Temperaturdriften, evtl. eingekoppelte Störsignale und Offsetspannungen kompensiert werden, was wesentlich zu einer störsicheren und hochgenauen Auswertung und Auslegung der Absolutkodierung beiträgt. Mittels eines Komparators oder Schmitt-Triggers wird das analoge Spannungssignal in bekannter Weise in digitale Signale umgewandet.

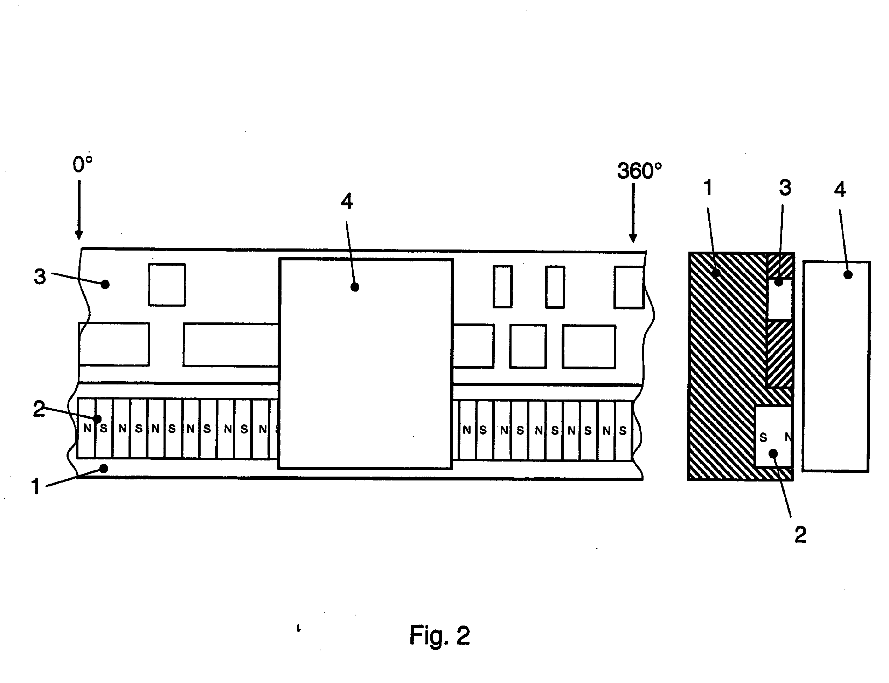

Fig. 2 zeigt eine schematische Darstellung eines Ausführungsbeispiels einer erfindungsgemäßen Positionsmesseinrichtung. Die Maßverkörperung entspricht der Maßverkörperung gemäß Fig. 1, so dass auf die entsprechende Beschreibung verwiesen wird. Die Abtasteinrichtung 4 enthält Sensoren, um sowohl die Inkrementalmarkierungen als auch die Absolutmarkierungen berührungsfrei und magnetisch zu erfassen. Die Abtasteinrichtung 4 und die Maßverkörperung können sich dabei entlang der Messstrecke relativ zueinander bewegen.

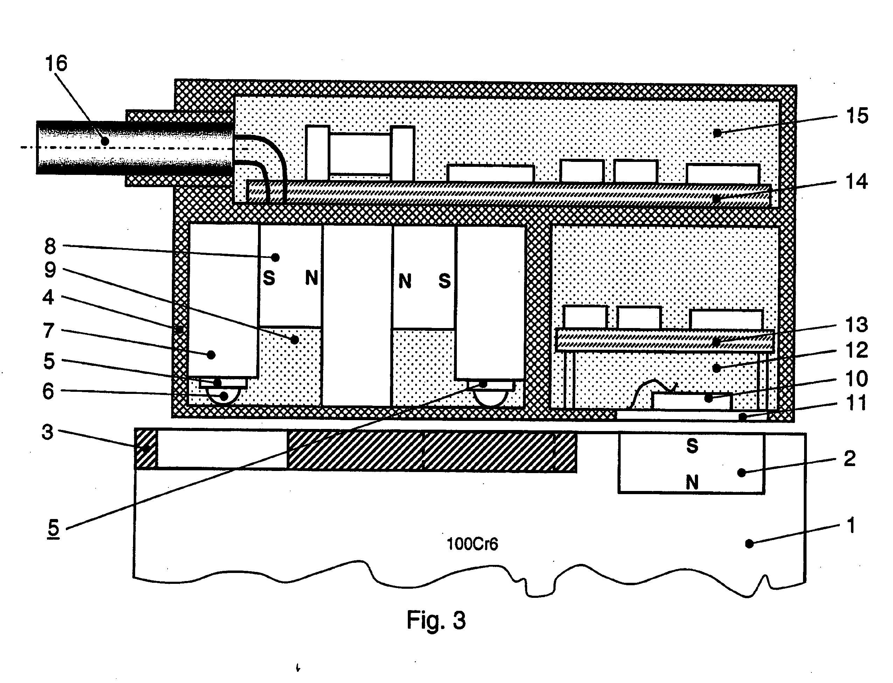

Fig. 3 zeigt eine schematische Darstellung einer Abtasteinrichtung einer erfindungsgemäßen Positionsmesseinrichtung gemäß einem ersten Ausführungsbeispiel. Die beiden magnetoresistiven Sensoren eines Sensorpaares 5 und 5 sind auf Polschuhe 7 aus ferromagnetischem Stahl mittels jeweils isolierenden Plättchen, wie z.B. Keramik, Kunststoff oder Glimmer, angeordnet, wobei die Polschuhe 7 symmetrisch gestaltet sind und zusammengenommen die Form eines E ergeben. Der magnetische Kreis wird mittels Permanentmagnete 8 magnetisch erregt. Die beiden Magnete können gegensinnig, wie gezeichnet, aber auch gleichsinnig gepolt sein. In Verbindung mit dem Endlosband 3 bilden die Polschuhe und die Magnete 8 einen magnetischen Kreis, wobei die Höhe der magnetischen Flussdichte wechselseitig in beiden Kreisen durch die flächenmäßig weniger ausgedehnten Vertiefungen oder Löcher im Band invers zueinander moduliert wird. Bei besonders feinen, also flächenmäßig weniger ausgedehnten Vertiefungen, im Band, kann es sinnvoll sein, so genannte magnetische Linsen 6, gestaltet als Halbkugeln aus ferromagnetischem Stahl auf den magnetoresistiven Sensoren aufzubringen, die als Flusskonzentratoren wirken. Aber auch andere Formen als Halbkugeln, wie z.B. Kegel, sind denkbar. Die entsprechende Verstärker- und Wandlerelektronik, wie zur Fig. 1 beschrieben, wird in Form von PCB oder Hybridschaltungen 14 ebenfalls innerhalb eines Kunststoff- (Polyamid Glasfaser) oder Leichtmetallspritzguss-Gehäuses (Aluminium) 4 untergebracht. Neben der Absolutkodierung ist die durch magnetisch aktive Elemente gebildete Inkrementalkodierung 2 auf der Wellenscheibe 1 angeordnet, die in bekannter Weise mittels eines weiteren magnetoresistiven Sensors 10 oder Sensorarrays abgetastet wird. Dem zugeordnet ist ebenfalls eine Verstärker- und Wandlerelektronik 13, die die Signale verstärkt, aufbereitet und in diamagnetischem Metall (Messing, Neusilber, Aluminium usw.) fixiert sein kann, welches auch als Deckel oder Gehäuseverschluss dienen kann. Zur Schwingungsdämpfung, zur Fixierung und zum Schutz gegen Feuchtigkeit bei Betauung der elektronischen Komponenten ist der Bereich innerhalb des Gehäuses vollständig oder teilweise vergossen, wobei bevorzugte Vergussmaterialien 9, 12 und 15 Silikon, PUR und Epoxydharz sein können, die im ausgehärteten Zustand eine ausreichende Elastizität aufweisen und deren thermischer Ausdehnungskoeffizient auf die mechanisch spannungsempfindlichen, elektronischen Komponenten abgestimmt sein kann. Als elektrisches Verbindungselement kann eine mehradrige, geschirmte Kabelleitung 16, wie gezeichnet, aber auch ein Steckverbinder dienen. Die magnetoresistiven Sensoren 10 befinden sich auf einem Schaltungsträger 11, der zugleich als Teil des Gehäuses der Abtasteinrichtung dient.

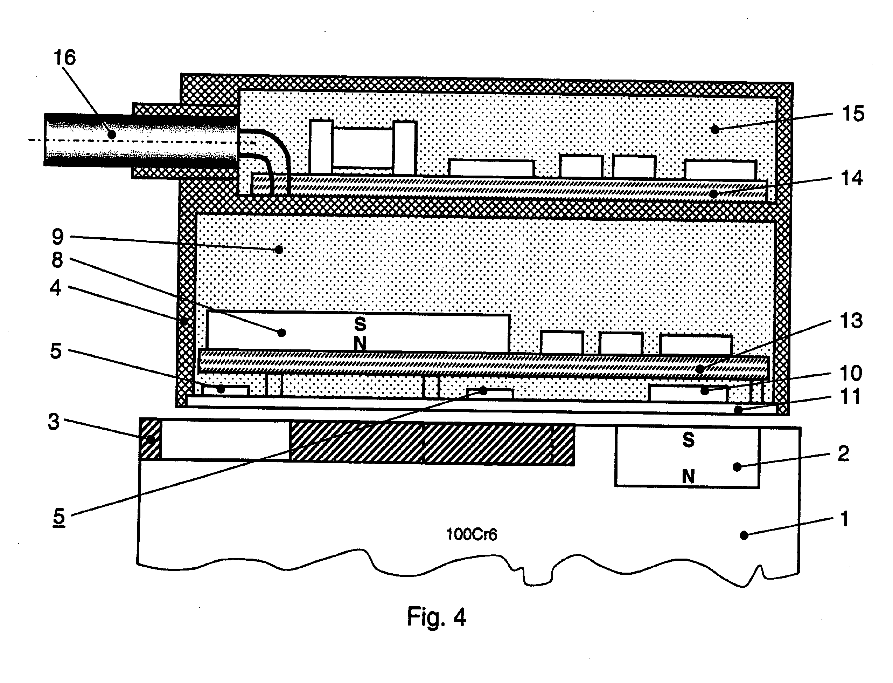

Fig. 4 zeigt eine schematische Darstellung einer Abtasteinrichtung einer erfindungsgemäßen Positionsmesseinrichtung gemäß einem zweiten Ausführungsbeispiel. Hierbei wurde auf die Polschuhe und die magnetischen Linsen verzichtet. Dadurch ergibt sich eine komponenten- und platzsparende Gestaltung, was zudem zu niedrigeren Herstellkosten gefertigt werden kann, als die Abtasteinrichtung gemäß Fig. 3. Der Schaltungsträger 11, auf dem die Sensoren 5, 5 und 10 angeordnet sind, stellt zugleich die zur Maßverkörperung hin gewandte Außenseite der Abtasteinrichtung dar.

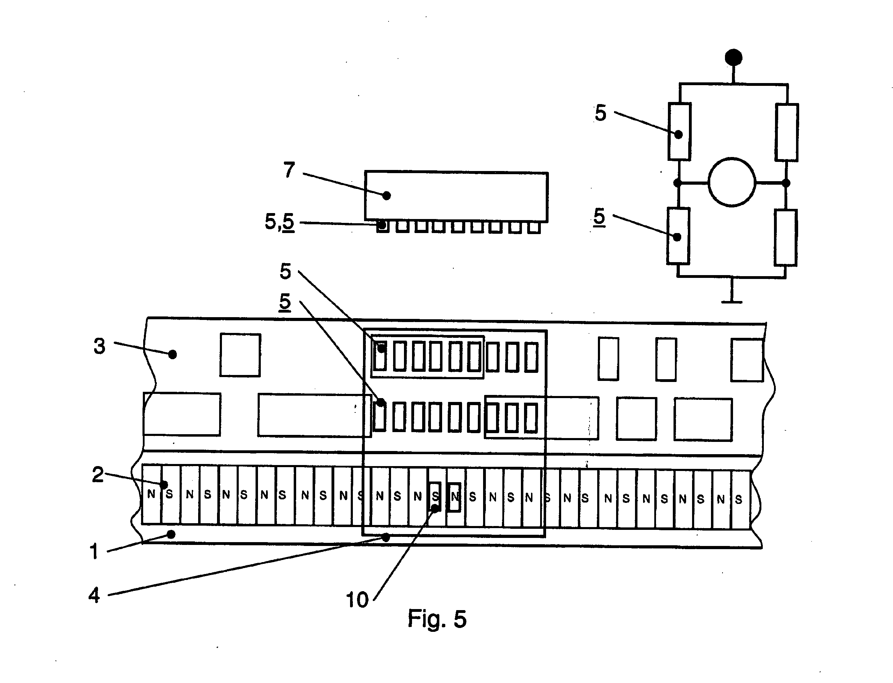

Fig. 5 zeigt eine schematische Schnittdarstellung des Ausführungsbeispiels gemäß Fig. 2. Dargestellt ist das Zusammenwirken der magnetoresistiven Sensoren 5 und 5 bzw. des Sensorarrays, das aus einer Vielzahl von magnetoresistiven Sensoren besteht, mit der inkrementellen Winkelkodierung 2 und der absoluten Winkelkodierung 3. Die Polteilung der inkrementellen Kodierung 10 kann gleich der absoluten Kodierung 5 und 5 sein, jedoch auch ein ganzzahliges Vielfaches davon, z.B. Faktor 2, 3, 4, etc. oder ein ganzzahliger Bruch daraus sein, z.B. 1/2, 1/3, 1/4 etc. Die Sensoren eines Paares 5 und 5 kommen dabei wechselweise deckungsgleich mit einer Lücke in der absoluten Winkelkodierung oder auf Metall zu liegen, woraus sich die oben beschriebene Differenzabtastung realisieren lässt, die zu einer sicheren Abfrage führt. Die Sensorpaare können in Form einer Widerstandshalb- oder Vollbrücke verschaltet sein. In Längsrichtung ist in das Endlosband 3 auf der einen Spur eine zufällige oder quasizufällige Kodierung eingebracht, auf der Parallelspur die invertierte Kodierung hierzu. Werden nun beide Spuren mittels des Sensorarrays abgefragt, so ergibt sich für jeden Bewegungsschritt ein eindeutiges, über dem Umfang nicht wiederholtes elektronisches Wort, aus dem die absolute Winkelposition eindeutig hervorgeht. Ist eine absolute Winkelauflösung von beispielsweise 8192 (= 13 Bit) pro Umdrehung gefordert, so sind insgesamt 13 Sensorpaare zur Abfrage dieser absoluten Winkelposition erforderlich.

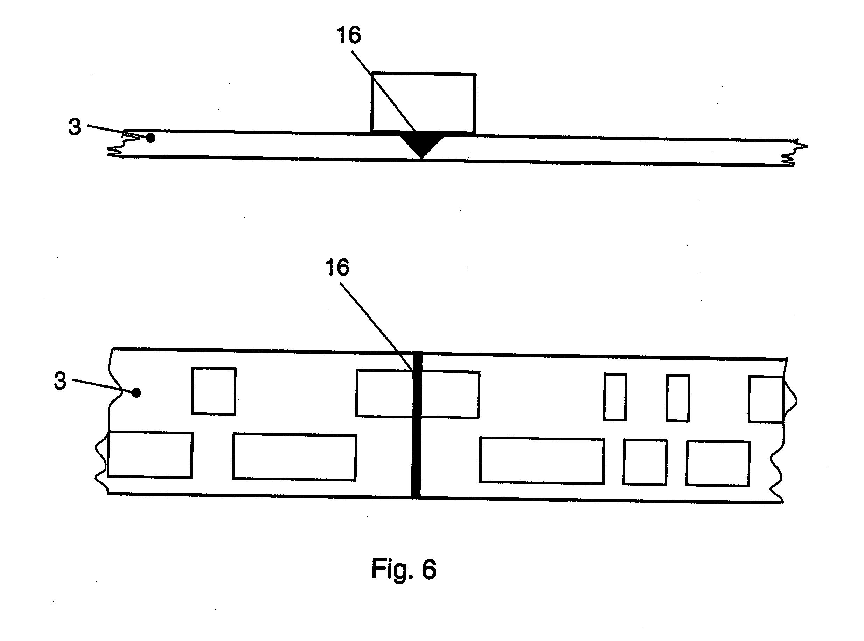

Fig. 6 zeigt eine schematische Darstellung einer erfindungsgemäßen Messspur mit Absolutmarkierungen. Dargestellt ist der mechanische Aufbau des Endlosbandes 3, auf dem die magnetisch nicht leitenden Bereiche in Form von Vertiefungen oder Löchern eingebracht ist. Diese Gestaltung wird insbesondere für Winkelteilungen bevorzugt, wobei die Maßverkörperung auf der Zylindermantelfläche des drehenden Maschinen- oder Lagerteils aufgezogen ist. Dieses Endlosband wird aus einem Blech hergestellt, das dann an der Stoßstelle 16 verschweißt ist (Laser- oder Widerstandsschweißung). Vor dem Verschweißen wird die Lochbreite ermittelt, gemessen und überwacht.

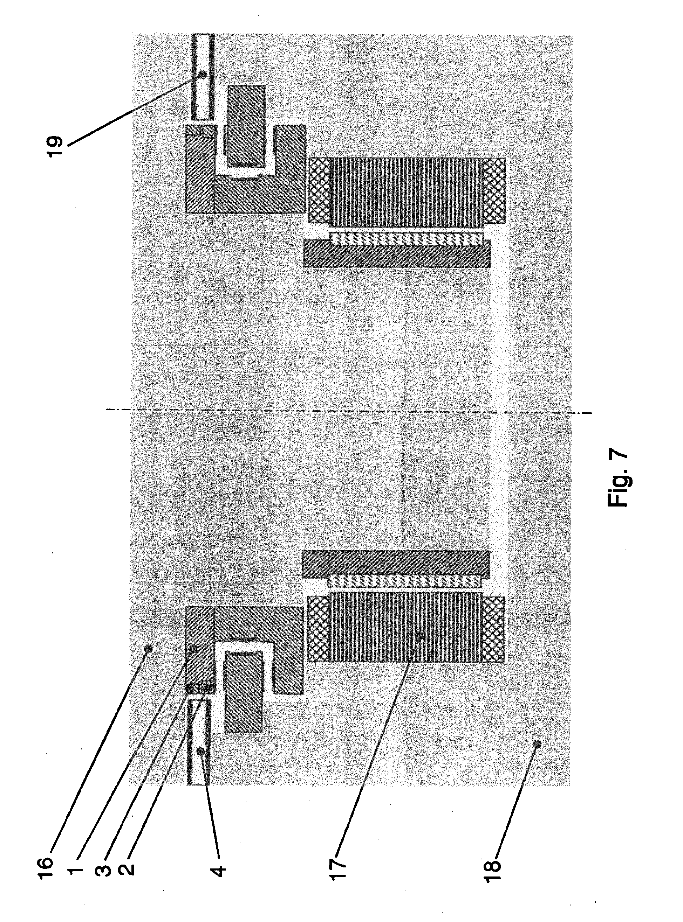

Fig. 7 zeigt eine schematische Darstellung einer erfindungsgemäßen Positionsmesseinrichtung integriert in einem Rundtisch. Der Rundtisch kann z.B. für eine Werkzeugmaschinenanwendung vorgesehen sein. Die Abtasteinrichtung umfasst hierbei einen ersten Abtastkopf 20 des Messsystems, der die Sensorik zur Abfrage der inkrementellen Winkelteilung und der absoluten Winkelkodierung beinhaltet, das das Rundtischlager mit der drehend gelagerten Wellenscheibe 1, die die inkrementelle Maßverkörperung 2 und die absolute Winkelkodierung 3 trägt. Der zusätzliche Abtastkopf 19 der Abtasteinrichtung beinhaltet nur eine Sensorik zur Abfrage der inkrementellen Winkelteilung. Der Rundtisch 16 ist in diesem Fall mittels eines Axial/Radialzylinderrollenlagers geführt, dessen Bestandteil die Wellenscheibe 1 ist. Angetrieben wird der Rundtisch mittels eines Torquemotors 17, dessen Rotor (Sekundärteil) mit dem Rundtisch 16 direkt und mechanisch steif verbunden ist. Der Stator des Torquemotors 17 ist mit dem Grundgestell 18 verschraubt. Dies hat den Vorteil, dass nicht nur der Torquemotor mechanisch steif mit dem drehenden Rundtisch gekoppelt ist, sondern auch das Messsystem, so dass dadurch hochdynamische und hochpräzise Positionieraufgaben realisierbar sind. Auch andere Anwendungen als diese, wie beispielsweise in Schwenkbrücken oder Fräsköpfen von Werkzeugmaschinen, sind auf diese Weise realisierbar. Darüber hinaus kann diese Anwendung auch auf andere Lagerbauformen, wie Zylinderrollen-, mehrreihige Schrägkugel-, Kegelrollen-, Kreuzrollenlager, Drehverbindungen oder auch Linearführungen übertragen werden.

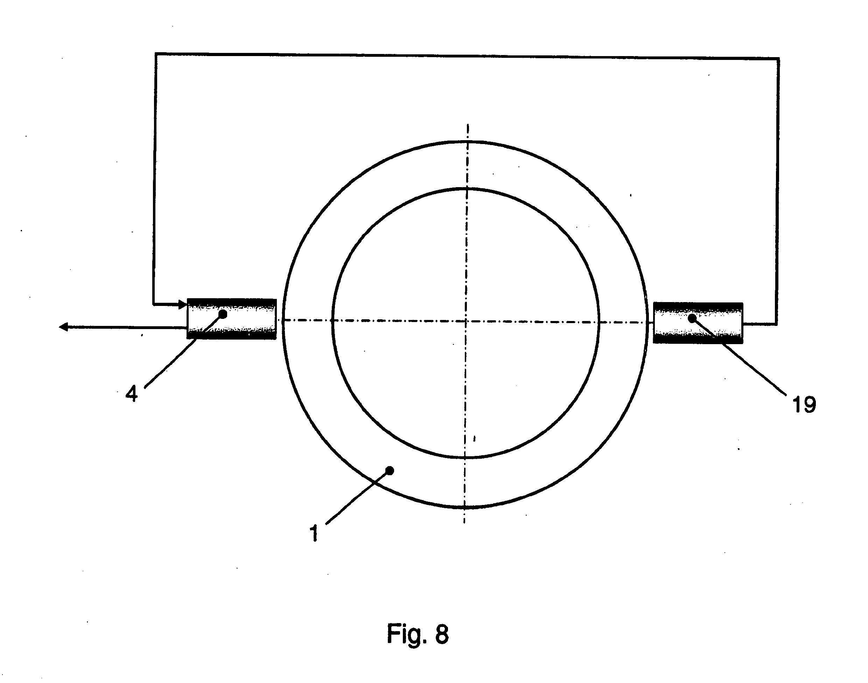

Fig. 8 zeigt eine schematische Anordnung zweier Abtasteinrichtungen gemäß dem Ausführungsbeispiel nach Fig. 7. Dargestellt ist die Verschaltung der beiden Abtastköpfe 19 und 20. Die inkrementellen Ausgangssignale des Abtastkopfes 19 werden in dem Abtastkopf 20 übertragen, dort mit den inkrementellen Signalen des Abtastkopfes 20 verschaltet, wie beispielsweise addiert oder voneinander subtrahiert. Dadurch können eventuelle auftretende Mittenverlagerungen der Wellenscheibe kompensiert werden, die inkrementelle Winkelauflösung verdoppelt und die Amplitude der gemeinsamen Ausgangssignale ebenfalls verdoppelt werden. Ebenso werden diese in Kombination mit der absoluten Winkelkodierung im Abtastkopf 20 ausgewertet und als Absolutwert in analoger oder digitaler Form ausgegeben.

### Bezugszeichenliste

- 1: Scheibe
- 2: inkrementelle Winkelteilung
- 3: Absolutkodierung
- 4: Abtasteinrichtung
- 5: Sensor eines Sensorpaares
- 5: Sensor eines Sensorpaares
- 6: magnetische Linsen
- 7: Polschuhe
- 8: Permanentmagnete
- 9: Vergussmaterial
- 10: magnetoresistiven Sensoren
- 11: Schaltungsträger
- 12: Vergussmaterial
- 13: Verstärker- und Wandlerelektronik
- 14: Hybridschaltung
- 15: Vergussmaterial
- 16: geschirmte Kabelleitung
- 17: Torquemotor
- 18: Grundgestell
- 19: Abtastkopf der Abtasteinrichtung
- 20: Abtastkopf der Abtasteinrichtung

## Patentansprüche

1. Maßverkörperung für eine Positionsmesseinrichtung, umfassend mindestens eine Messspur mit Inkrementalmarkierungen und mindestens eine Messspur mit Absolutmarkierungen, **dadurch gekennzeichnet, dass** die Inkrementalmarkierungen durch magnetisch aktive Elemente gebildet werden und die Absolutmarkierungen durch magnetisch passive Elemente gebildet werden.

2. Maßverkörperung gemäß Anspruch 1, **dadurch gekennzeichnet, dass** die magnetisch aktiven Elemente Permanentmagnete sind.

3. Maßverkörperung gemäß Anspruch 1 oder 2, **dadurch gekennzeichnet, dass** die magnetisch passiven Elemente durch ein hochpermeables Material ausgebildet werden.

4. Maßverkörperung gemäß einem der Ansprüche 1 - 3, **dadurch gekennzeichnet, dass** die magnetisch passiven Elemente unter Verwendung von magnetisch leitenden und magnetisch nicht leitenden Bereichen gebildet werden.

5. Maßverkörperung gemäß Anspruch 4, **dadurch gekennzeichnet, dass** sich die magnetisch leitenden und die magnetisch nicht leitenden Bereiche entlang der Messspur abwechseln.

6. Maßverkörperung gemäß einem der Ansprüche 4 - 5, **dadurch gekennzeichnet, dass** die magnetisch nicht leitenden Bereiche durch Vertiefungen, Lücken oder Löcher gebildet werden.

7. Maßverkörperung gemäß einem der Ansprüche 4 - 6, **dadurch gekennzeichnet, dass** der mindestens einen Messspur mit Absolutmarkierungen eine Referenzabsolutspur zugeordnet ist, die parallel zur Messspur mit Absolutmarkierungen verläuft und wobei entlang der Messspur mit Absolutmarkierungen und entlang der Referenzabsolutspur jeweils magnetisch leitende und magnetisch nicht leitende Bereiche angeordnet sind und die Bereiche der Referenzabsolutspur komplementär zu den Bereichen der Messspur mit Absolutmarkierungen ausgebildet sind.

8. Maßverkörperung gemäß einem der Ansprüche 1 - 7, **dadurch gekennzeichnet, dass** in einer Absolutmarkierung eine Information zur Absolutpositionsbestimmung kodiert ist.

9. Maßverkörperung gemäß Anspruch 4 und 8, **dadurch gekennzeichnet, dass** die Information zur Absolutpositionsbestimmung unter Verwendung der geometrischen Form, insbesondere der Länge, Breite oder Tiefe, und/oder der Position der magnetisch leitenden und magnetisch nicht leitenden Bereiche kodiert ist.

10. Maßverkörperung gemäß einem der Ansprüche 1 - 9, **dadurch gekennzeichnet, dass** in einer Inkrementalmarkierung eine Information zur Relativpositionsbestimmung kodiert ist.

11. Maßverkörperung gemäß einem der Ansprüche 1 - 10, **dadurch gekennzeichnet, dass** die Messspur mit Absolutmarkierungen und die Messspur mit Inkrementalmarkierungen parallel zueinander verlaufen oder sich komplett überdecken.

12. Positionsmesseinrichtung umfassend eine Maßverkörperung gemäß einem der Ansprüche 1 - 11 sowie eine dazu relativ bewegliche Abtasteinrichtung mit Sensoren zur Abtastung der Inkrementalmarkierungen und/oder der Absolutmarkierungen.

13. Positionsmesseinrichtung gemäß Anspruch 12, **dadurch gekennzeichnet, dass** die Sensoren zur Abtastung der Inkrementalmarkierungen durch Sensoren zur Messung des magnetischen Flusses ausgebildet sind.

14. Positionsmesseinrichtung gemäß Anspruch 12 oder 13, **dadurch gekennzeichnet, dass** die Sensoren zur Abtastung der Absolutmarkierungen durch Sensoren zur Messung des magnetischen Flusses, der magnetischen Induktion und/oder elektromagnetischer Strahlung ausgebildet sind.

15. Positionsmesseinrichtung gemäß Anspruch 13 oder 14, **dadurch gekennzeichnet, dass** die Sensoren zur Messung des magnetischen Flusses durch Hallsensoren oder magnetoresistive Sensoren ausgebildet sind.

16. Positionsmesseinrichtung gemäß einem der Ansprüche 12 - 15, **dadurch gekennzeichnet, dass** sich mindestens ein Sensor an einem Teil eines Gehäuses der Abtasteinrichtung, insbesondere an einem Schaltungsträger, befindet.

17. Positionsmesseinrichtung gemäß einem der Ansprüche 12 - 16, **dadurch gekennzeichnet, dass** die Positionsmesseinrichtung in einer Linearführung umfassend ein stillstehendes Maschinenelement eingesetzt wird, insbesondere dass sich die Maßverkörperung auf dem stillstehendem Maschinenelement befindet.

18. Positionsmesseinrichtung gemäß einem der Ansprüche 12 - 16, **dadurch gekennzeichnet, dass** die Positionsmesseinrichtung in einer Lagerstelle eines beweglichen Maschinenteils umfassend ein Lager eingesetzt wird, insbesondere dass sich die Maßverkörperung auf dem beweglichen Maschinenelement befindet.

19. Positionsmesseinrichtung gemäß einem der Ansprüche 12 - 18, **dadurch gekennzeichnet, dass** die Messgenauigkeit resultierend aus den Inkrementalmarkierungen und den Sensoren zur Abtastung der Inkrementalspur größer ist als die Messgenauigkeit resultierend aus den Absolutmarkierungen und den Sensoren zur Abtastung der Absolutspur.

20. Verfahren zum Bestimmen einer Messposition eines ersten Körpers in Bezug zu einen zweiten Körper mittels einer Positionsmesseinrichtung gemäß einem der Ansprüche 12 - 19, wobei die Körper zueinander relativ beweglich sind und wobei an einem Körper die Maßverkörperung und an einem anderen Körper die Abtasteinrichtung angeordnet ist, umfassend die Verfahrensschritte:
- Platzieren des ersten und/oder des zweiten Körpers in der zu bestimmenden Messposition,
- Abtasten mindestens einer Absolutmarkierung durch die Sensoren zur Abtastung der Absolutmarkierungen und
- Bestimmen der Messposition anhand der mindestens einen abgetasteten Absolutmarkierung.

21. Verfahren zum Bestimmen einer Messposition gemäß Anspruch 20, umfassend ferner den Schritt des Abtastens mindestens einer Relativmarkierung durch die Sensoren zur Abtastung der Relativmarkierungen, wobei das Bestimmen der Absolutposition anhand der mindestens einen abgetasteten Absolutmarkierung und der mindestens einen abgetasteten Relativmarkierung erfolgt.

22. Verfahren zum Bestimmen einer Messposition gemäß Anspruch 21, **dadurch gekennzeichnet, dass** das Bestimmen der Messposition mittels Synchronisationsdaten, die eine Zuordnung zwischen Absolutmarkierungen und Inkrementalmarkierungen darstellen, erfolgt.

23. Verfahren zum Kalibrieren einer Positionsmesseinrichtung gemäß einem der Ansprüche 12 - 19, umfassend die Verfahrensschritte:
- Platzieren der Abtasteinrichtung und/oder der Maßverkörperung an einer bekannten Kalibrierposition,
- Abtasten mindestens einer Absolutmarkierung,
- Abtasten mindestens einer Relativmarkierung und
- Kalibrieren der Positionsmesseinrichtung durch Hinterlegen von Synchronisationsdaten, die eine Zuordnung zwischen Absolutmarkierungen und Inkrementalmarkierungen darstellen.

24. Verfahren zum Kalibrieren einer Positionsmesseinrichtung gemäß Anspruch 23, wobei die Verfahrensschritte an mindestens zwei unterschiedlichen Kalibrierpositionen durchgeführt werden.

25. Verfahren zum Kalibrieren einer Positionsmesseinrichtung gemäß Anspruch 24, wobei die Verfahrensschritte an jeder Absolutmarkierung als Kalibrierposition durchgeführt werden.

## Claims

1. Material measure for a position measuring device, comprising at least one measuring track with incremental markings and at least one measuring track with absolute markings, **characterized in that** the incremental markings are formed by magnetically active elements and the absolute markings are formed by magnetically passive elements.

2. Material measure according to Claim 1, **characterized in that** the magnetically active elements are permanent magnets.

3. Material measure according to Claim 1 or 2, **characterized in that** the magnetically passive elements are formed by a highly permeable material.

4. Material measure according to one of Claims 1 - 3, **characterized in that** the magnetically passive elements are formed by using magnetically conductive and magnetically non-conductive regions.

5. Material measure according to Claim 4, **characterized in that** the magnetically conductive and magnetically non-conductive regions alternate along the measuring track.

6. Material measure according to either of Claims 4 and 5, **characterized in that** the magnetically non-conductive regions are formed by depressions, gaps or holes.

7. Material measure according to one of Claims 4 - 6, **characterized in that** the at least one measuring track with absolute markings is assigned an absolute reference track, which extends parallel to the measuring track with absolute markings, and **in that** magnetically conductive and magnetically non-conductive regions are respectively arranged along the measuring track with absolute markings and along the absolute reference track, and the regions of the absolute reference track are formed so as to be complementary to the regions of the measuring track with absolute markings.

8. Material measure according to one of Claims 1 - 7, **characterized in that** an item of information for absolute position determination is encoded in an absolute marking.

9. Material measure according to Claims 4 and 8, **characterized in that** the item of information for absolute position determination is encoded by using the geometric shape, in particular the length, width or depth, and/or the position of the magnetically conductive and magnetically non-conductive regions.

10. Material measure according to one of Claims 1 - 9, **characterized in that** an item of information for relative position determination is encoded in an incremental marking.

11. Material measure according to one of Claims 1 - 10, **characterized in that** the measuring track with absolute markings and the measuring track with incremental markings extend parallel to each other or cover each other completely.

12. Position measuring device comprising a material measure according to one of Claims 1 - 11 and a sensing device that can be moved relative thereto having sensors for sensing the incremental markings and/or the absolute markings.

13. Position measuring device according to Claim 12, **characterized in that** the sensors for sensing the incremental markings are formed by sensors for measuring magnetic flux.

14. Position measuring device according to Claim 12 or 13, **characterized in that** the sensors for sensing the absolute markings are formed by sensors for measuring magnetic flux, magnetic induction and/or electromagnetic radiation.

15. Position measuring device according to Claim 13 or 14, **characterized in that** the sensors for measuring magnetic flux are formed by Hall sensors or magneto-resistive sensors.

16. Position measuring device according to one of Claims 12 - 15, **characterized in that** at least one sensor is located on part of a housing of the sensing device, in particular on a circuit carrier.

17. Position measuring device according to one of Claims 12 - 16, **characterized in that** the position measuring device is used in a linear guide comprising a stationary machine element, in particular **in that** the material measure is located on the stationary machine element.

18. Position measuring device according to one of Claims 12 - 16, **characterized in that** the position measuring device is used in a bearing point of a movable machine part comprising a bearing, in particular **in that** the material measure is located on the movable machine element.

19. Position measuring device according to one of Claims 12 - 18, **characterized in that** the measuring accuracy resulting from the incremental markings and the sensors for sensing the incremental track is greater than the measuring accuracy resulting from the absolute markings and the sensors for sensing the absolute track.

20. Method for determining a measured position of a first body in relation to a second body by means of a position measuring device according to one of Claims 12 - 19, wherein the bodies can be moved relative to each other and wherein the material measure is arranged on one body and the sensing device is arranged on another body, comprising the method steps:
- placing the first and/or the second body in the measured position to be determined,
- sensing at least one absolute marking by means of the sensors for sensing the absolute markings and
- determining the measured position by using the at least one sensed absolute marking.

21. Method for determining a measured position according to Claim 20, further comprising the step of sensing at least one relative marking by means of the sensors for sensing the relative markings, wherein the absolute position is determined by using the at least one sensed absolute marking and the at least one sensed relative marking.

22. Method for determining a measured position according to Claim 21, **characterized in that** the measured position is determined by means of synchronization data which represent an association between absolute markings and incremental markings.

23. Method for calibrating a position measuring device according to one of Claims 12 - 19, comprising the method steps:
- placing the sensing device and/or the material measure in a known calibration position,
- sensing at least one absolute marking,
- sensing at least one relative marking and
- calibrating the position measuring device by storing synchronization data which represent an association between absolute markings and incremental markings.

24. Method for calibrating a position measuring device according to Claim 23, wherein the method steps are carried out at at least two different calibration positions.

25. Method for calibrating a position measuring device according to Claim 24, wherein the method steps are carried out at each absolute marking as a calibration position.

## Revendications

1. Ensemble de mesure pour dispositif de mesure de position, comprenant au moins une piste de mesure dotée de repères incrémentiels et au moins une piste de mesure dotée de repères absolus,
**caractérisé en ce que**
les repères incrémentiels sont formés par des éléments magnétiques actifs et les repères absolus par des éléments magnétiques passifs.

2. Ensemble de mesure selon la revendication 1, **caractérisé en ce que** les éléments magnétiques actifs sont des aimants permanents.

3. Ensemble de mesure selon les revendications 1 ou 2, **caractérisé en ce que** les éléments magnétiques passifs sont formés d'un matériau à haute perméabilité.

4. Ensemble de mesure selon l'une des revendications 1 à 3, **caractérisé en ce que** les éléments magnétiques passifs sont formés en recourant à des parties magnétiquement conductrices et à des parties magnétiquement non conductrices.

5. Ensemble de mesure selon la revendication 4, **caractérisé en ce que** les parties magnétiquement conductrices et les parties magnétiquement non conductrices sont alternées le long de la piste de mesure.

6. Ensemble de mesure selon l'une des revendications 4 à 5, **caractérisé en ce que** les parties magnétiquement non conductrices sont formées par des creux, des interstices ou des trous.

7. Ensemble de mesure selon l'une des revendications 4 à 6, **caractérisé en ce qu'**une piste absolue de référence est associée à la ou aux pistes de mesure dotées de repères absolus et s'étend parallèlement à la piste de mesure dotée de repères absolus, des parties magnétiquement conductrices et des parties magnétiquement non conductrices étant disposées le long de la piste de mesure dotée de repères absolus et le long de la piste de référence absolue et les parties de la piste de référence absolue étant configurées de manière complémentaire aux parties de la piste de mesure dotée de repères absolus.

8. Ensemble de mesure selon l'une des revendications 1 à 7, **caractérisé en ce qu'**une information concernant la détermination absolue de position est codée dans un repère absolu.

9. Ensemble de mesure selon les revendications 4 et 8, **caractérisé en ce que** l'information concernant la détermination absolue de position est codée en recourant à la forme géométrique, en particulier à la longueur, la largeur ou la profondeur et/ou à la position des parties magnétiquement conductrices et des parties magnétiquement non conductrices.

10. Ensemble de mesure selon l'une des revendications 1 à 9, **caractérisé en ce qu'**une information concernant la détermination relative de position est codée dans un repère incrémentiel.

11. Ensemble de mesure selon l'une des revendications 1 à 10, **caractérisé en ce que** la piste de mesure dotée de repères absolus et la piste de mesure dotée de repères incrémentiels s'étendent parallèlement l'une à l'autre ou se recouvrent complètement.

12. Dispositif de mesure de position comprenant un ensemble de mesure selon l'une des revendications 1 à 11 ainsi qu'un dispositif de palpage mobile par rapport à ce dernier et doté de capteurs qui palpent les repères incrémentiels et/ou les repères absolus.

13. Dispositif de mesure de position la revendication 12, **caractérisé en ce que** les capteurs de palpage des repères incrémentiels sont formés par des capteurs de mesure du flux magnétique.

14. Dispositif de mesure de position selon les revendications 12 ou 13, **caractérisé en ce que** les capteurs de palpage des repères absolus sont formés par des capteurs de mesure du flux magnétique, de l'induction magnétique et/ou d'un rayonnement électromagnétique.

15. Dispositif de mesure de position selon les revendications 13 ou 14, **caractérisé en ce que** les capteurs de mesure de flux magnétique sont formés par des capteurs Hall ou des capteurs magnétorésistifs.

16. Dispositif de mesure de position selon l'une des revendications 12 à 15, **caractérisé en ce qu'**au moins un capteur est situé sur une partie d'un boîtier du dispositif de palpage et en particulier sur un support de circuit.

17. Dispositif de mesure de position selon l'une des revendications 12 à 16, **caractérisé en ce que** le dispositif de mesure de position est utilisé dans un guide linéaire qui comprend un élément de machine immobile et en particulier **en ce que** l'ensemble de mesure est situé sur l'élément immobile de machine.

18. Dispositif de mesure de position selon l'une des revendications 12 à 16, **caractérisé en ce que** le dispositif de mesure de position est utilisé en un emplacement de montage d'une partie mobile de machine comprenant un palier, et en particulier **en ce que** l'ensemble de mesure est situé sur l'élément mobile de machine.

19. Dispositif de mesure de position selon l'une des revendications 12 à 18, **caractérisé en ce que** la précision de mesure résultant des repères incrémentiels et les capteurs de palpage de la piste incrémentielle est supérieure à la précision de mesure qui résulte des repères absolus et des capteurs de palpage de la piste absolue.

20. Procédé de détermination d'une position de mesure de un premier corps par rapport à un deuxième corps au moyen d'un dispositif de mesure de position selon l'une des revendications 12 à 19, les corps pouvant se déplacer l'un par rapport à l'autre, l'ensemble de mesure étant disposé sur un corps et le dispositif de palpage étant disposé sur un autre corps, le procédé comportant les étapes qui consistent à :
placer le premier et/ou le deuxième corps dans la position de mesure à déterminer,
palper au moins un repère absolu par les capteurs de palpage des repères absolus et
déterminer la position de mesure à l'aide du ou des repères absolus palpés.

21. Procédé de détermination d'une mesure selon la revendication 20, comprenant en outre l'étape qui consiste à palper au moins un repère relatif par les capteurs de palpage des repères relatifs, la détermination de la position absolue s'effectuant à l'aide du ou des repères absolus palpés et du ou des repères relatifs palpés.

22. Procédé de détermination d'une mesure selon la revendication 21, **caractérisé en ce que** la détermination de la position de mesure s'effectue au moyen de données de synchronisation qui constituent une association entre des repères absolus et des repères incrémentiels.

23. Procédé d'étalonnage d'un dispositif de mesure de position selon l'une des revendications 12 à 19, comprenant les étapes qui consistent à
placer le dispositif de palpage et/ou l'ensemble de mesure en une position d'étalonnage connue,
palper au moins un repère absolu,
palper au moins un repère relatif et
étalonner le dispositif en conservant en mémoire des données de synchronisation qui constituent une association entre des repères absolus et des repères incrémentiels.

24. Procédé d'étalonnage d'un dispositif de mesure de position selon la revendication 23, dont les étapes sont exécutées en au moins deux positions d'étalonnage différentes.

25. Procédé d'étalonnage d'un dispositif de mesure de position selon la revendication 24, dont les étapes sont exécutées sur chaque repère absolu utilisé comme position d'étalonnage.
